(19) **Europäisches Patentamt**

**European Patent Office**

**Office européen des brevets**

(11) **EP 1 413 738 A2**

(12) **EUROPÄISCHE PATENTANMELDUNG**

(43) Veröffentlichungstag:
    28.04.2004  Patentblatt 2004/18

(51) Int Cl.⁷: **F02K 9/48**, F02K 9/64,
    F02K 9/68

(21) Anmeldenummer: 03023629.3

(22) Anmeldetag: **16.10.2003**

(84) Benannte Vertragsstaaten:
    **AT BE BG CH CY CZ DE DK EE ES FI FR GB GR
    HU IE IT LI LU MC NL PT RO SE SI SK TR**
    Benannte Erstreckungsstaaten:
    **AL LT LV MK**

(30) Priorität: **22.10.2002  DE 10249191**

(71) Anmelder: **Blaschko, Siegfried
    84174 Eching (DE)**

(72) Erfinder: **Blaschko, Siegfried
    84174 Eching (DE)**

(74) Vertreter: **Winter, Brandl, Fürniss, Hübner, Röss,
    Kaiser, Polte Partnerschaft
    Patent- und Rechtsanwaltskanzlei
    Alois-Steinecker-Strasse 22
    85354 Freising (DE)**

(54) **Rakete**

(57)     Ein Düsenantriebssystem umfasst eine Gasbeschleunigungsvorrichtung (2) zur Erzeugung von Druckgas und eine Antriebsdüse (40), die mit der Gasbeschleunigungsvorrichtung (2) verbunden ist und von ihr mit Druckluft versorgt wird, wobei die Gasbeschleunigungsvorrichtung (2) eine Gasbeschleunigungsturbine (4), einen Gasführungskanal (6) zur Führung eines Gasstromes, ein Druckgassammelrohr (8) und eine Gasrückführungsvorrichtung (10) zum Antrieb der Gasbeschleunigungsturbine (4) aufweist, und die Antriebsdüse eine Wirbelkammer (42) zur Erzeugung einer spiralförmigen Druckgasstromes, eine Dissoziationskammer (44) zur Dissoziation von Wasser, eine Verbrennungsvorrichtung (46) zur Verbrennung eines Treibstoffes, einen Kühlkreislauf (48) und eine Druckgasausstoßkammer (50) zur Erzeugung von Schub aufweist.

Fig. 1

**Beschreibung**

Die Erfindung betrifft ein Düsenantriebssystem, mit einer Gasbeschleunigungsvorrichtung zur Erzeugung von Druckgas und mit einer mit der Gasbeschleunigungsvorrichtung verbundenen Antriebsdüse, die eine Wirbelkammer, eine Dissoziationskammer, eine Verbrennungsvorrichtung, einen Kühlkreislauf und eine Druckgasausstoßkammer umfasst, und bei der eine chemische Reaktion von Wasserstoff mit Sauerstoff zu Wasser einen Schub erzeugt.

Die meisten herkömmlichen Düsenantriebssystemen weisen einen äußerst geringen Wirkungsgrad auf, da ein Großteil der zum Betrieb erforderlichen Energie nicht in Form von Energiekreisläufen rückgewonnen, sondern in Form von Wärme an die Umgebung abgegeben wird.

Dadurch, dass die Verlustleistung nicht wieder zumindest teilweise dem System zugeführt wird, muss dem System zur Erzielung einer vorgegebenen Geschwindigkeit eine relativ hohe Eingangsenergie zugeführt werden. Dies ist mit erheblichen Zusatzkosten verbunden.

Ein weiterer Nachteil herkömmlicher Düsenantriebssysteme besteht darin, dass der zum Antrieb erforderliche Treibstoff häufig nur unzureichend verbrannt wird und somit für die Umwelt schädliche Abgase ausgestoßen werden. In Zeiten großer Umweltbelastung durch die Verbrennung fossiler Brennstoffe ist eine solcher Umgang mit ökologischen Resourcen nicht mehr vertretbar.

In der US 3 834 179 ist eine Vorrichtung zur Erzeugung von Energie beschrieben, bei dem ein Fluid einen thermodynamischen Kreisprozess durchläuft, indem das es in einem als Zentrifuge wirkenden ersten Rotor komprimiert und erwärmt wird, über Düsen, die entlang des Umfangs des ersten Rotors angeordnet sind, ausgestoßen und einem zweiten Rotor zugeführt wird, wo es zur gemeinsamen Achse beider Rotoren gelenkt wird und dabei entspannt und abkühlt. Anschließend wird es wieder dem ersten Rotor zugeführt und der Kreislauf beginnt von neuem. Die Erwärmung und Abkühlung des Fluids erfolgt über einen ersten bzw. zweiten externen Kreislauf.

In der DE 196 12 507 C2 ist ein Antrieb offenbart, bei dem eine Hauptbrennkammer, eine Nebenbrennkammer, eine Turbinenkammer und eine Kompressorkammer auf einer gemeinsamen Achse hintereinander angeordnet sind. Der Hauptbrennkammer wird eingangsseitig ein Gemisch aus Silanöl und Metallsilicidstaub sowie vorgewärmte, über die Kompressorkammer angesaugte Druckluft zugeführt. In der Kammer reagiert der Wasserstoff des Silanöls mit dem Sauerstoff der Luft. Durch die dabei entstehenden hohen Temperaturen reagiert der Stickstoff der Luft mit dem Silizium des Silanöls unter Bildung von Siliziumnitrid. Die gebildeten Verbrennungsgase weisen einen Überschuss an $H_2$ auf, der in der Nebenbrennkammer unter Zuführung kalter Druckluft verbrennt. Beim Betrieb dieses Antriebs wird nur Wasser an die Umwelt abgegeben.

Es ist Aufgabe der vorliegenden Erfindung, die Nachteile herkömmlicher Düsenantriebssysteme zu überwinden und ein Düsenantriebssystem bereitzustellen, bei dem ein Großteil der zum Betrieb erforderlichen Energie in Form von Kreisläufen wiedergewonnen wird und das einen ökologischen Betrieb mit minimaler Umweltbelastung ermöglicht.

Es ist eine weitere Aufgabe der vorliegenden Erfindung, ein Düsenantriebssytem bereitzustellen, das in seiner Größe und Konstruktion so angepasst werden kann, dass es auch in Kraftfahrzeugen oder Landmaschinen eingesetzt werden kann.

Diese Aufgabe wird durch die Merkmale der Ansprüche 1, 13 und 36 gelöst.

Vorteilhafte erfindungsgemäße Weiterbildungen sind in den jeweiligen Unteransprüchen genannt.

Insbesondere wird die erfindungsgemäße Aufgabe durch eine Gasbeschleunigungsvorrichtung zur Erzeugung eines Druckgases gelöst, die eine Gasbeschleunigungsturbine, einen Gasführungskanal zur Führung eines Gasstromes, ein Druckgassammelrohr und eine Gasrückführungsvorrichtung zum Antrieb der Gasbeschleunigungsturbine umfasst, wobei die Gasbeschleunigungsturbine einen innenliegenden Antriebsrotor umfasst, der eine Mehrzahl von Rotorschaufeln aufweist, und einen außenliegenden Gasbeschleunigungsrotor umfasst, der eine Mehrzahl von Gasbeschleunigungsschaufeln aufweist, wobei sich der Antriebsrotor und der Gasbeschleunigungsrotor konzentrisch um eine gemeinsame Rotationsachse drehen. Die Gasbeschleunigungsschaufeln weisen in Rotationsrichtung der Gasbeschleunigungsturbine jeweils konkav ausgebildete Oberflächen und jeweils ein inneres oder achsnahes Schaufelende sowie ein äußeres oder achsfernes Schaufelende auf. Der Gasführungskanal ist entlang eines Umkreises angeordnet, der bei der Rotation des Gasbeschleunigungsrotors von den äußeren Schaufelenden der Gasbeschleunigungsschaufeln überstrichen wird, wobei ein Ende des Gasführungskanals mit einem ersten Ende des Druckgassammelrohres verbunden ist. Das Druckgassammelrohr weist in der Nähe seines ersten, mit dem Gasführungskanal verbundenen Endes einen Drosselbereich zur Ausbildung von Druckgas auf. Ferner weist das Druckgassammelrohr ein zweites Ende mit einer Verzweigungsstelle auf, an der das es in ein erstes, ein zweites und ein drittes Zuführungsrohr verzweigt. Das Druckgassammelrohr weist außerdem eine Abzweigungsstelle auf, die zwischen dem Drosselbereich und der Verzweigungsstelle angeordnet ist und die mit einem Einströmende der Gasrückführungsvorrichtung verbunden ist. Die Gasrückführungsvorrichtung weist zudem ein Ausströmende auf, das derart in der Nähe des Antriebsrotors der Gasbeschleunigungsturbine angeordnet ist, dass ein über die Gasrückführungsvorrichtung rückgeführter Gasstrom in Umdrehungsrichtung der Gasbeschleunigungsturbine auf den Antriebsrotor gerichtet ist. Die Gasrückführungsvorrichtung weist eine Gasverbindungsstelle auf, die zwischen ihrem Einströmende und ihrem Ausströmende angeordnet ist.

Die erfindungsgemäße Aufgabe wird darüber hinaus durch eine Antriebsdüse gelöst, die von der erfindungsgemäßen Gasbeschleunigungsvorrichtung mit Druckluft versorgt wird und die eine Wirbelkammer zur Erzeugung eines spiralförmigen Druckgasstromes, eine Dissoziationskammer zur Dissoziation insbesondere von $H_2O$ in $H_2$ und $O_2$, eine Verbrennungsvorrichtung zur Verbrennung eines Treibstoffes, einen Kühlkreislauf und eine Druckgasausstoßkammer zur Erzeugung von Schub umfasst, wobei die Wirbelkammer ein erstes Ende und ein zweites Ende aufweist, und ein Volumen einschließt, das von einer Innenwand und einer Außenwand begrenzt ist. In der Nähe des ersten Endes der Wirbelkammer ist in der Außenwand eine Druckgaseintrittsöffnung und in der Nähe des zweiten Endes der Wirbelkammer in der Innenwand eine Druckgasaustrittsöffnung vorgesehen. Die Druckgasausstoßkammer ist von einer Mantelfläche und einer ersten und einer zweiten Grundfläche begrenzt, wobei eine Gaseinströmöffnung in der ersten Grundfläche und eine Gasausströmöffnung in der zweiten Grundfläche vorgesehen ist und die Gaseinströmöffnung mit dem zweiten Ende der Wirbelkammer verbunden ist. Die Dissoziationskammer umfasst eine erste Teilkammer, die innen von der Außenwand der Wirbelkammer begrenzt ist, und eine zweite Teilkammer, die mit der ersten Teilkammer verbunden und außen von der Innenwand der Wirbelkammer begrenzt ist, wobei die erste Teilkammer zumindest teilweise mit einer Schüttung aus wärmespeichernden Körpern gefüllt ist, die von einem Gasstrom durchströmt werden kann. Die Antriebsdüse ist von einer Ummantelung umgeben, und der Kühlkreislauf ist zumindest teilweise in der Ummantelung angeordnet. Die Ummantelung umfasst eine Wasserzuföröffnung zur Zuführung von Wasser in den Kühlkreislauf. Die Verbrennungsvorrichtung umfasst eine Treibstoffzuföröffnung zur Zuführung von Treibstoff. Ferner ist die Druckgaseintrittsöffnung mit dem ersten Zuführungsrohr, die Verbrennungsvorrichtung mit dem zweiten Zuführungsrohr und der Kühlkreislauf mit dem dritten Zuführungsrohr verbunden.

Die erfindungsgemäße Lösung umfasst zudem ein Düsenantriebssystem, das eine Gasbeschleunigungsvorrichtung und eine Antriebsdüse (40) umfasst, die mit der Gasbeschleunigungsvorrichtung verbunden ist.

Durch die konkave Form der Gasbeschleunigungsschaufeln wird erreicht, dass ein angesaugter Gasvolumenstrom effektiv in eine Vorzugsrichtung umgeleitet und in diese Richtung hin beschleunigt wird.

Gemäß einer vorteilhaften Ausführungsform der Erfindung weisen die Gasbeschleunigungsschaufeln jeweils eine im wesentlichen halbkreisförmige Querschnittsfläche aufweisen. Obwohl jede konkave Ausbildungsform, wie sie oben beschrieben ist, strömungstechnisch dazu geeignet ist, den Gasvolumenstrom in Rotationsrichtung der Rotoren zu beschleunigen, weist eine halbkreisförmige Querschnittsfläche gegenüber allen anderen Querschnittsflächen den Vorteil auf, dass sie kostengünstig herzustellen ist.

Gemäß einer weiteren vorteilhaften Ausbildungsform der Erfindung fallen die jeweiligen Tangenten der Gasbeschleunigungsschaufeln an deren äußerem Ende mit der Tangente an den Umkreis in diesem Punkt im wesentlichen zusammen. Dies hat den Vorteil, dass der in den Gasführungskanal einströmende Gasvolumenstrom nur eine tangentiale Geschwindigkeitskomponente aufweist, so dass die gesamte kinetische Energie zum Drosselbereich gerichtet ist und somit eine effiziente Aufstauung des Druckgases erreicht wird.

Gemäß einer weiteren vorteilhaften Ausbildungsform der Erfindung sind die Rotorschaufeln jeweils gegenüber einer Ebene, die die Rotationsachse enthält geneigt. Auf diese Weise wird die von der über die Gasrückführungsvorrichtung auf den Antriebsrotor gerichtete Gasströmung optimal ausgenutzt und somit der Wirkungsgrad der Gasbeschleunigungsvorrichtung optimiert, da der Gasstrom dann einen möglichst kleinen Winkel gegenüber einer Senkrechten auf die Oberfläche der Rotorschaufeln einnimmt.

Gemäß einer weiteren vorteilhaften Ausbildungsform der Erfindung ist eine Kühlvorrichtung zur Kühlung des Drosselbereichs des Druckgassammelrohres vorgesehen.

Gemäß einer weiteren vorteilhaften Ausbildungsform der Erfindung ist ein Kühlzuführungsrohr mit einem ersten Ende und einem zweiten Ende vorgesehen, wobei das erste Ende mit dem Drosselbereich und das zweite Ende mit dem Kühlkreislauf der Antriebsdüse verbunden.

Gemäß einer weiteren vorteilhaften Ausbildungsform der Erfindung ist das von der Gasbeschleunigungsvorrichtung angesaugte Gas vorzugsweise im wesentlichen Luft. Es kann aber auch jedes andere Gas verwendet werden, falls die erfindungsgemäße Vorrichtung in einem Bereich eingesetzt wird, in der die Dichte der Luft unzureichend ist, so dass ein erfindungsgemäßer Betrieb der Gasbeschleunigungsvorrichtung nicht möglich ist, solange die nachstehende beschriebenen chemischen Reaktionen, die die Gasbeschleunigungsturbine antreiben, gewährleistest sind und die nachstehend beschriebenen chemischen Reaktionen in der Antriebsdüse nicht beeinträchtigt sind.

Gemäß einer weiteren vorteilhaften Ausbildungsform der Erfindung ist die Gasrückführungsvorrichtung in Form eines sichelförmigen Rohres ausgebildet. Dadurch, dass das der Abzweigungsstelle des Druckgassammelrohres zugewandte Ende der Gasrückführungsvorrichtung einen geringeren Durchmesser aufweist als der mittlere Bereich der Gasrückführungsvorrichtung, wird das sich bei der Zündung explosionsartig ausdehnende Gas-Druckgas-Gemisch vorzugsweise in Richtung des Antriebsrotors gedrängt und eine Rückströmung in Richtung der Abzweigungsstelle weitestgehend vermieden. Dadurch wird der größte Teil der bei der chemischen Reaktion freiwerdenden Energie in Form von Strömungsenergie des Gas-Druckgas-Gemisches auf die Rotorschaufeln des Antriebsrotors gerichtet.

Die Rückströmung des Gas-Druckgas-Gemisches kann auch dadurch vermieden werden, dass zwischen der Gasverbindungsstelle und der Abzweigungsstelle eine Sperrventil angeorndet ist.

Gemäß einer weiteren vorteilhaften Ausbildungsform der Erfindung weist der Drosselbereich eine starke Krümmung des Druckgassammelrohrs auf. Durch die Krümmung erfährt die in dem Gasführungskanal im wesentlichen laminare Strömung eine Richtungsänderung und wird zumindest teilweise turbulent. Dadurch erhöht sich der Strömungswiderstand und das Gas staut sich auf.

Dies hat den Vorteil, dass einfach, kostengünstig und effizient Druckgas in dem Druckgassammelrohr erzeugt wird.

Gemäß einer weiteren vorteilhaften Ausbildungsform der Erfindung kann das Druckgas in dem Druckgassammelrohr auch durch eine Querschnittsreduzierung im Drosselbereich erreicht werden.

Gemäß einer weiteren vorteilhaften Ausbildungsform der Erfindung ist Gasbeschleunigungsvorrichtung mit einer Haltevorrichtung verbunden, die dazu geeignet ist, Schwingungen und Unwuchten der Gasbeschleunigungsvorrichtung und Bewegungen von außen aufzunehmen, wobei der Gasführungskanal mit dem Druckgassammelrohr über eine flexible Verbindung verbunden ist.

Eine flexible Verbindung weist gegenüber einer starren Verbindung stets den Vorteil auf, dass Schwingungen, die bei Rotoren üblicherweise auftreten, nicht auf die gesamte Vorrichtung übertragen sondern federnd aufgefangen werden.

Gemäß einer weiteren vorteilhaften Ausbildungsform der Erfindung ist die flexible Verbindung eine Gelenkverbindung.

Gemäß einer weiteren vorteilhaften Ausbildungsform der Erfindung sind die Wirbelkammer, die Dissoziationskammer, Verbrennungsvorrichtung, der Kühlkreislauf und die Druckgasausstoßkammer entlang einer geometrischen Achse angeordnet. Diese Anordnung weist den Vorteil auf, dass die die Antriebsdüse durchströmenden Gase eine gemeinsame mittlere Vorzugsrichtung aufweisen, die der Richtung der Beschleunigung der Antriebsdüse entgegengesetzt ist, und dass die Massen sämtlicher die Antriebsdüse bildenden Bauteile möglichst symmetrisch verteilt sind, so dass die Flugeigenschaften der Antriebsdüse optimiert sind.

Gemäß einer weiteren vorteilhaften Ausbildungsform der Erfindung sind die Innenwand und die Außenwand der Wirbelkammer vorzugsweise konzentrisch um die geometrischen Achse angeordnet und erstrecken sich jeweils von dem ersten Ende der Wirbelkammer bis zu dem zweiten Ende der Wirbelkammer.

Gemäß einer weiteren vorteilhaften Ausbildungsform der Erfindung ist eine Querschnittsfläche der Innenwand entlang der geometrische Achse im wesentlichen konstant, und eine Querschnittsfläche der Außenwand weist entlang der geometrischen Achse ein Maximum auf, das zwischen dem ersten Ende und dem zweiten Ende angeordnet ist, so dass ein mittlerer Bereich der Wirbelkammer ein größeres Volumen aufweist als ein entsprechender Bereich des ersten Endes bzw. des zweiten Endes der Wirbelkammer.

Diese Geometrie der Wirbelkammer weist den Vorteil auf, dass das in die Wirbelkammer einströmende Druckgas möglichst lange mit der heißen Außenwand der Wirbelkammer in Kontakt ist und sich somit beim Durchströmen der Wirbelkammer stark aufheizen und isobar ausdehen kann, bevor es im unteren Bereich der Wirbelkammer eine im wesentlichen isotherme Kompression erfährt, die eine hohe axiale Beschleunigung des Druckgases aus der Druckgasaustrittsöffnung und somit einen optimalen Schub zur Folge hat.

Gemäß einer weiteren vorteilhaften Ausführungsform der Erfindung ist die Druckgasaustrittsöffnung vorzugsweise gleichmäßig um die geometrische Achse angeordnet.

Dies hat den Vorteil, dass ein gleichmäßiges Austreten des Druckgases aus der Wirbelkammer und somit ein optimales Vermischen des Druckgases aus der Wirbelkammer mit den durch die zweit Teilkammer ausströmenden Gas gewährleistet ist.

Gemäß einer weiteren vorteilhaften Ausführungsform der Erfindung ist die Druckgasausstoßkammer (50) im wesentlichen tonnenförmig.

Gemäß einer weiteren vorteilhaften Ausführungsform der Erfindung weist die sich aus einer Verbindung der Wirbelkammer mit der Druckgasausstoßkammer gebildete äußere Form an deren Verbindungsstelle eine Verengung auf.

Gemäß einer weiteren vorteilhaften Ausführungsform der Erfindung wird das Wasser über die Wasserzuföröffnung vorzugsweise in zerstäubter Form in den Kühlkreislauf eingespritzt wird.

Die hat den Vorteil, dass eine optimale Vermengung des Wassers mit dem Druckgas gewährleistet wird und sich das dann in Form kleiner Wassertröpfchen vorliegende Wasser gut durch die Kühlvorrichtung befördern lässt.

Gemäß einer weiteren vorteilhaften Ausführungsform der Erfindung wird der Treibstoff über die Treibstoffzuföröffnung vorzugsweise in zerstäubter Form eingespritzt.

Durch das Zerstäuben des Treibstoffs wird, wie bei jeder Verbrennung, eine optimale, das heißt eine im wesentlichen vollständige und schadstofffreie Verbrennung des Treibstoffs erreicht.

Gemäß einer weiteren vorteilhaften Ausführungsform der Erfindung ist die Treibstoffzuführöffnung in der Nähe einer Verbindungsstelle zwischen der Verbrennungsvorrichtung mit dem zweiten Zuführungsrohr und die Wasserzuführöffnung in der Nähe einer Verbindungsstelle zwischen dem Kühlkreislauf mit dem dritten Zuführungsrohr angeordnet ist.

Dies hat den Vorteil, dass der Treibstoff bzw. das Wasser möglichst vollständig von der Strömung des Druckgasstromes mitgerissen wird.

Gemäß einer weiteren vorteilhaften Ausführungsform der Erfindung sind die Körper vorzugsweise aus einer Keramik hergestellt und weisen vorzugsweise eine hohe Wärmekapazität auf.

Dies hat den Vorteil, dass im Inneren der Dissoziationskammer eine im wesentlichen konstante Temperatur aufrecht erhalten werden kann. Statt Keramik kann auch jedes andere Material verwendet werden, sofern damit eine Temperatur erreicht und aufrecht erhalten werden kann, die dazu geeignet ist, Wasser in Wasserstoff und Sauerstoff zu dissoziieren und Treibstoffpartikel, die in der Verbrennungsvorrichtung nur nicht oder nur unvollständig verbrannt wurden, vollständig zu verbrennen.

Gemäß einer weiteren vorteilhaften Ausführungsform der Erfindung sind die Körper vorzugsweise kugelförmig.

Gemäß einer weiteren vorteilhaften Ausführungsform der Erfindung ist die Druckgaseintrittsöffnung derart ausgebildet, dass ein in die Wirbelkammer einströmender Druckgasstrom im wesentlichen entlang der Innenseite der Außenwand der Wirbelkammer in die Wirbelkammer einströmt.

Dies hat den Vorteil, dass das in die Wirbelkammer einströmende Druckgas möglichst lange mit der Außenwand in Kontakt ist und somit eine große Wärmemenge aufnehmen kann, so dass eine nachfolgende exotherme chemische Reaktion, in der Wasserstoff und Sauerstoff zu Wasser reagieren, eine nur noch geringe Aktivierungsenergie benötigt.

Gemäß einer weiteren vorteilhaften Ausführungsform der Erfindung ist in der Nähe des zweiten Endes der Wirbelkammer (42), innerhalb der zweiten Teilkammer (70b) der Dissoziationskammer (44), ein Spiralzapfen (92) so angeordnet, dass er von dem durch die zweite Teilkammer (70b) strömenden Druckgasstrom umströmt wird, wobei der Spiralzapfen (92) derartig ausgebildet ist, dass die Geschwindigkeit des Druckgasstromes eine um die geometrische Achse (51) gerichtete Tangentialkomponente erhält.

Die Anordnung des Spiralzapfens in der Strömung des Druckgases weist den Vorteil auf, dass damit eine optimale Vermischung aller die Antriebsdüse von oben nach unten durchströmenden Druckgase und Gase gewährleistet ist, und somit ein maximaler Wirkungsgrad dadurch erreicht wird, dass möglichst alle Gase miteinander reagieren und möglichst die gesamte dabei entstehende Energie in Schub umgewandelt wird.

Gemäß einer weiteren vorteilhaften Ausführungsform der Erfindung ist der Treibstoff vorzugsweise ein Biotreibstoff.

Durch die Verwendung von Biotreibstoff ist die erfindungsgemäße Vorrichtung den heutigen ökologischen Anforderungen angepasst. Jeder andere, konventionelle Treibstoff wie zum Beispiel Benzin ist jedoch ebenso geeignet.

Gemäß einer weiteren vorteilhaften Ausführungsform der Erfindung ist die Antriebsdüse um mindestens eine Achse kippbar.

Gemäß einer weiteren vorteilhaften Ausführungsform der Erfindung wird die Verkippung durch einen hydraulischen Antrieb bewerkstelligt.

Gemäß einer weiteren vorteilhaften Ausführungsform der Erfindung wird sowohl der in der Verbrennungsvorrichtung vollständig verbrannte als auch der in der Verbrennungsvorrichtung unvollständig verbrannte Treibstoff durch eine Treibstoffauslassöffnung in die Dissoziationskammer geleitet.

In der Verbrennungsrichtung braucht im Betrieb der Antriebsdüse nur eine Verbrennungstemperatur eingestellt werden, bei der nur ein Teil des Treibstoffs bzw. der Treibstoff nur unvollständig verbrennt, da die gesamten, bei der Verbrennung entstehenden Abgase durch die Dissoziationskammer geleitet werden, wo die bisher nicht und unvollständig verbrannten Bestandteile des Treibstoffs verbrannt werden. Dies hat den Vorteil, dass ein ökologisches und ökonomisches Betreiben der erfindungsgemäßen Vorrichtung gewährleistet ist.

Gemäß einer weiteren vorteilhaften Ausführungsform der Erfindung ist die Verbrennungsvorrichtung ringförmig um die Druckgasausstoßkammer und angrenzend an die Schüttung von Körpern angeordnet.

Dies hat den Vorteil, dass eine möglichst große, bei der Verbrennung des Treibstoffs in der Verbrennungsvorrichtung entstehende Energie an die Schüttung abgegeben werden kann.

Gemäß einer weiteren vorteilhaften Ausführungsform der Erfindung umschließt die Ummantelung wenigstens die Wirbelkammer und die Dissoziationskammer.

Dies hat den Vorteil, dass das Gas-Wasser-Gemisch, dass die Kühlvorrichtung durchströmt, Wärme von der Schüttung aufnehmen kann und sich so auf eine bestimmte Temperatur aufwärmt, wodurch bei einer nachfolgenden Dissoziation des in dem Gas-Wasser-Gemisch enthaltenen Wassers möglich ist, ohne dass dabei der Schüttung eine zu große Wärmemenge entzogen werden müsste.

Gemäß einer weiteren vorteilhaften Ausführungsform der Erfindung ist der Kühlkreislauf flächig ausgeführt.

Im Gegensatz zu einer nicht-flächigen Ausführung des Kühlkreislaufes weist eine flächige Ausführung eine verbesserte Wärmeübertragung auf.

Gemäß einer weiteren vorteilhaften Ausführungsform der Erfindung ist der Kühlkreislauf zudem in einem Teil der Mantelfläche angeordnet, der die Dissoziationskammer begrenzt.

Gemäß einer weiteren vorteilhaften Ausführungsform der Erfindung ist der Kühlkreislauf im wesentlichen in dem Teil der Ummantelung angeordnet ist, der die Dissoziationskammer begrenzt.

Diese Anordnung gewährleistet eine maximale Energieübertragung von der Dissoziationskammer auf das Gas-Wasser-Gemisch in der Kühlvorrichtung.

Gemäß einer weiteren vorteilhaften Ausführungsform der Erfindung kann die Aufteilung des von dem Druckgassammelrohr (8) bereitgestellten Druckgasvolumenstromes auf die Wirbelkammer (42), die Verbrennungsvorrichtung (46) und die Kühlvorrichtung (76) je nach Bedarf gesteuert werden.

Die Möglichkeit der Einflussnahme auf die Strömungsaufteilung ermöglicht einen an die Detail-Konstruktion der Antriebsdüse, die Parameter des in den Antriebsrotor angesaugten Gases und den verwendeten Treibstoff optimierten Betrieb der erfindungsgemäßen Vorrichtung.

Gemäß einer weiteren vorteilhaften Ausführungsform der Erfindung ist das bei der Gasverbindungsstelle in die Druckgasrückführungsvorrichtung eingeleitete Gas Wasserstoff.

Weitere Vorteile und Merkmale der Erfindung werden deutlich anhand der nachstehenden ausführlichen Beschreibung einer vorteilhaften Ausführungsform in Verbindung mit der beigefügten Zeichnung, auf die Bezug genommen wird.

In der Zeichnung ist:

Figur 1 eine schematische Gesamtansicht, die eine vorteilhafte Ausführungsform des Düsenantriebssystems gemäß der Erfindungs zeigt, das eine Gasbeschleunigugsvorrichtung und eine Antriebsdüse umfasst;

Figur 2 zeigt eine Querschnittsansicht einer erfindungsgemäßen Gasbeschleunigungsschaufel.

Figur 3 eine Querschnittsansicht der Antriebsdüse der Fig. 1.

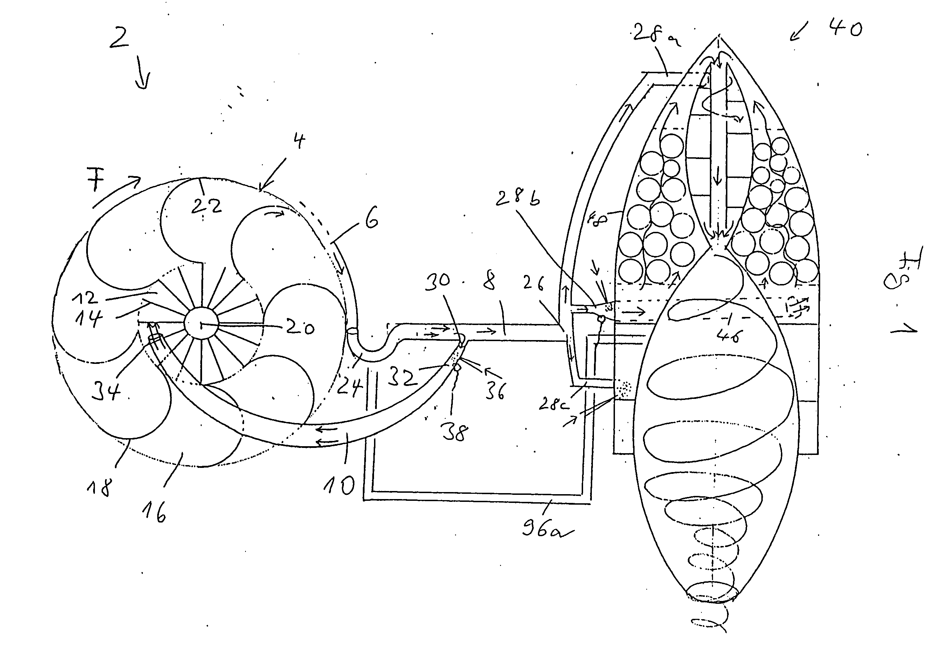

Unter Bezugnahme auf Fig. 1 ist eine Gasbeschleunigungsvorrichtung 2 gezeigt, die eine Gasbeschleunigungsturbine 4, einen Gasführungskanal 6, ein Druckgassammelrohr 8 und eine Gasrückführungsvorrichtung 10 umfasst. Die Gasbeschleunigungsturbine 4 umfasst einen innenliegenden Antriebsrotor 12, der eine Mehrzahl von Rotorschaufeln 14 aufweist, sowie einen außenliegenden Gasbeschleunigungsrotor 16, der eine Mehrzahl von Gasbeschleunigungsschaufeln 18 aufweist, wobei die Rotorschaufeln 14 des Antriebsrotors 12 sowie die Gasbeschleungigungsschaufeln 18 der Gasbeschleunigungsturbine 4 jeweils konzentrisch um eine Rotationsachse 20 angeordnet sind. Der Gasführungskanal 6 ist entlang eines Umkreises angeordnet, der von äußeren Enden 22 der rotierenden Gasbeschleunigungsschaufeln 18 überstrichen wird. Eine Ende des Gasführungskanals 6 ist mit einem ersten Ende des Druckgassammelrohrs 8 verbunden. Das Druckgassammelrohr 8 weist im Bereich seines ersten Endes einen gekrümmten Drosselbereich 24 auf. Ferner weist das Druckgassammelrohr 8 ein zweites Ende und im Bereich des zweiten Endes eine Verzweigungsstelle 26 auf, an der das Druckgassammelrohr 8 in ein erstes 28a, ein zweites 28b und drittes Zuführungsrohr 28c verzweigt. Das Druckgassammelrohr 8 weist ferner eine Abzweigungsstelle 30 auf, die zwischen dem Drosselbereich 24 und der Verzweigungsstelle 26 angeordnet ist und die mit einem Einströmende 32 der Gasrückführungsvorrichtung 10 verbunden ist. Ein Ausströmende 34 der Gasrückführungsvorrichtung 10 ist in so der Nähe der Rotorschaufeln 14 des Antriebsrotors 12 angeordnet, dass ein aus der Gasrückführungsvorrichtung 10 ausströmender Gasstrom derart auf die Rotorschaufeln 14 gerichtet ist, dass der Gasstrom den Antriebsrotor 12 und somit die Gasbeschleunigungsturbine 4 in Drehung versetzen kann, wie es in Figur 1 durch den Pfeil F angedeutet ist. Die Gasrückführungsvorrichtung 10 weist in der Nähe der Abzweigungsstelle 30 eine Gasverbindungstelle 36 auf, durch die ein entzündbares Gas, zum Beispiel Wasserstoff, eingeleitet werden kann. Im Bereich der Gasverbindungsstelle 36 ist außerdem eine Zündvorrichtung 38 angeordnet, mit der das in die Gasrückführungsvorrichtung 10 eingeleitete Wasserstoff gezündet werden kann. Der Drosselbereich ist über ein Kühlzuführungsrohr 96a, das aus Gründen der Übersichtlichkeit schematisch nur in Fig. 1 dargestellt ist, in der Nähe einer Verbrennungsvorrichtung 46 einer Antriebsdüse 40 mit einem Kühlkreislauf 48 verbunden, um die Antriebsdüse 40 die bei der Kühlung des Drosselbereichs 24 abgeführte Wärmeenergie zuzuführen. Die Verbindung des ersten Endes des Kühlzuführungsrohrs 96a mit dem Drosselbereich ist nur angedeutet und kann in jeder From ausgebildet sein, die dazu geeignet ist, eine Übertragung der Wärmeenergie zu gewährleisten.

Im Folgenden wird ein stationärer Bewegungszustand der Gasbeschleunigungsvorrichtung 2 beschrieben.

In einem stationären Bewegungszustand der Gasbeschleunigungsvorrichtung 2 gemäß der Erfindung mischt sich der in das Gasverbindungsstelle 36 eingeleitete entzündbare Gas mit dem von der Abzweigungsstelle 30 des Druckgassammelrohrs 8 kommenden Druckgas, meist Luft, zu einem Gas-Druckgas-Gemisch, das mit Hilfe der Zündvorrichtung 38 gezündet wird, d.h. das entzündbare Gas reagiert mit dem in dem Druckgas bzw. der Luft enthaltenen Sauerstoff, so dass sich das Gas-Druckgas-Gemisch explosionsartig ausdehnt. Dadurch, dass gemäß der Ausführungsform der Querschnitt der Gasrückführungsvorrichtung 10 in der Nähe der Abzweigungsstelle 30 geringer ist als der Querschnitt in einem mittleren Bereich der Gasrückführungsvorrichtung 10, wird das bei der Reaktion entzündete Gas-Druckgas-Gemisch in Richtung des Ausströmendes 34 der Gasrückführungsvorrichtung 10 gedrängt, tritt dort in Form eines gerichteten Freistrahls aus und trifft auf die Rotorschaufeln 14 des Antriebsrotors 12. Auf diese Weise wird der Antriebsrotor 12 in Drehung um die Rotationsachse 20 versetzt. Da der Antriebsrotor 12 starr mit dem Gasbeschleunigungrotor 16 verbunden ist, wird auch dieser in Drehung um die Rotationsachse 20 versetzt. Die Gasbeschleunigungsschaufeln 18 des Gasbeschleunigungsrotors 16 weisen in Drehrichtung konkav ausgebildete Oberflächen auf. Durch die bei der Drehung des Antriebsrotors 12 und des Gasbeschleunigungsrotors 16 auftretenden Zentrifugalkräfte wird das in den Antriebsrotor 12 angesaugte Gas-Druckgas-Gemisch bezüglich der Rotationsachse 20 radial nach außen beschleunigt. Darüber hinaus erfährt das radial nach außen beschleunigte Gas aufgrund der konkaven Oberflächen der Gasbeschleunigungsschaufeln 18 eine Geschwindigkeitskomponente in Drehrichtung der Rotoren, dh. in Richtung des Pfeiles F der Figur 1. Das Gas wird somit in den Gasführungskanal 6 gedrängt und durch diesen in den Drosselbereich 24 des Druckgassammelrohrs 8 geleitet. Aufgrund der Richtungsänderungen, die das Gas in dem Drosselbereich 24 erfährt, wird es abgebremst und aufgestaut, so dass sich im Drosselbereich 24 ein Druckgas ausbildet. Ein erster Teil des so erzeugten Druckgases wird an der Abzweigungsstelle 30 des Druckgassammelrohres 8 abgenommen und mit dem in die Gasverbindungsstelle 36 eingeleiteten entzündbaren Gas mit Hilfe der Zündvorrichtung 38 zur Reaktion gebracht. Das durch die explosionsartige chemische Reaktion expandierende Gas-Druckgas-Gemisch strömt durch die Gasrückführvorrichtung 10 auf die Rotorschaufeln 14 des Antriebsrotors 12. Damit ist ein erster Kreislauf geschlossen. Ein zweiter Teil des durch den Drosselbereich 24 in das Druckgassammelrohr 8 einströmenden Druckgases strömt an der Abzweigungsstelle 30 vorbei zu der Verzweigungsstelle 26 des Druckgassammelrohrs (8) und wird dem ersten 28a, dem zweiten 28b und dem dritten Zuführungsrohr 28c zugeführt, wobei der den jeweiligen Zuführungsrohren zugeführte Gasvolumenstrom in jeder geeigneten Weise den jeweiligen Anforderungen angepasst und gesteuert werden kann.

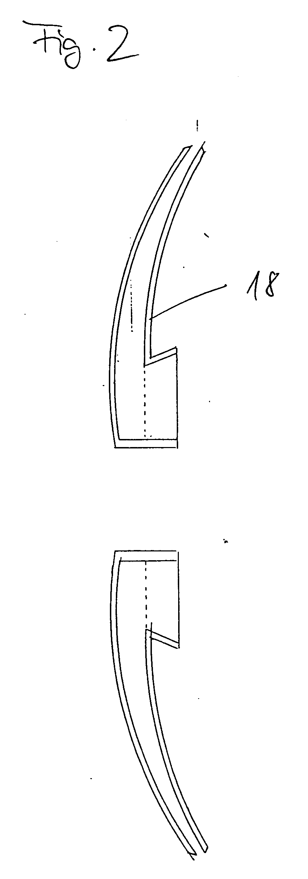

Unter Bezugnahme auf Fig. 2 ist ein Querschnitt der Gasbeschleunigungsschaufel 18 gezeigt. Im Querschnitt ist eine seitliche Wölbung der Gasbeschleunigungsschaufel 18 und somit der Gasbeschleunigungsturbine 4 zu erkennen. Durch diese Wölbung kann bei ansonsten gleichen radialen Außenabmessungen der Gasbeschleunigungsvorrichtung 2 eine Vergrößerung der Beschleunigungsstrecke des zu beschleunigenden Gas-Luft-Gemisches erreicht werden. Dadurch wird erreicht, dass das Luft-Gas-Gemisch über einen längeren Zeitraum Beschleunigungsenergie aufnehmen kann, bevor es die Gasbeschleunigungsvorrichtung 2 verlässt.

Zum Starten der Gasbeschleunigungsvorrichtung 2 ist z.B. ein Elektromotor oder ein Verbrennungsmotor oder eine andere Antriebsquelle erforderlich, die dazu geeignet ist, eine Rotationsgeschwindigkeit der Rotoren herzustellen, die ausreicht, dass die Gasbeschleunigungsvorrichtung 2 in dem oben beschriebenen stationären Kreislauf betrieben werden kann.

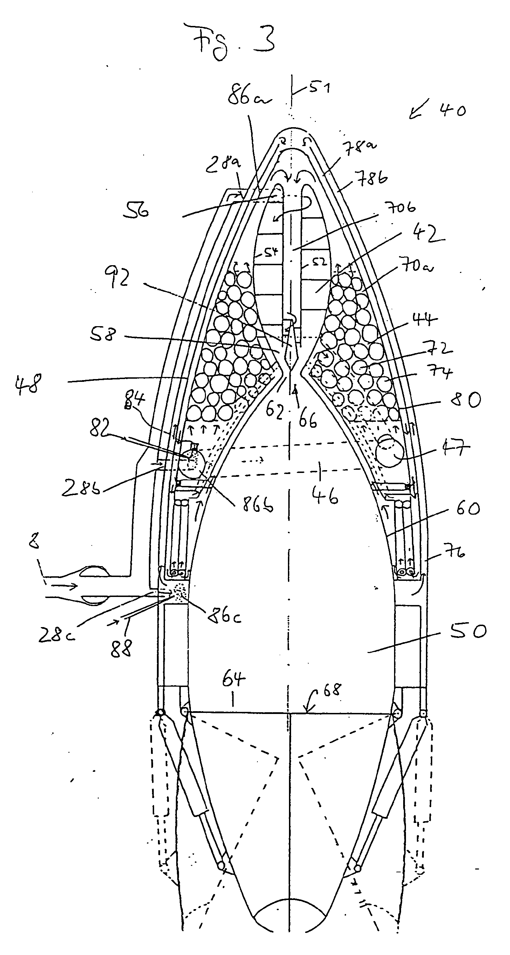

Unter Bezugnahme auf Fig. 3 ist die Antriebsdüse 40 gezeigt, die eine Wirbelkammer 42 zur Erzeugung eines spiralförmigen Gasstromes, eine Dissoziationskammer 44 zur Dissoziation insbesondere von Wasser in dessen Bestandteile Wasserstoff und Sauerstoff, die Verbrennungsvorrichtung 46 zur Verbrennung von Treibstoff, einen Kühlkreislauf 48 sowie eine Druckgasausstoßkammer 50 zur Erzeugung von Schub aufweist. Die Wirbelkammer 42, die Dissoziationskammer 44, die Verbrennungsvorrichtung 46, der Kühlkreislauf 48 und die Druckgasausstoßkammer 50 sind gemäß der Ausführungsform entlang einer geometrischen Achse 51 angeordnet, wie es in Fig. 3 dargestellt ist.

Die Wirbelkammer 42 ist im vorderen Teil der Antriebsdüse 40 (in Fig. 3 oben) angeordnet und weist ein erstes (in Fig. 3 oberes) Ende und ein zweites (in Fig. 3 unteres) Ende auf, und schließt ein Volumen ein, das von einer Innenwand 52 und einer Außenwand 54 begrenzt wird, die vorzugsweise konzentrisch zu der geometrischen Achse angeordnet sind und die sich jeweils von dem ersten (oberen) Ende der Wirbelkammer 42 zu dem zweiten (unteren) Ende der Wirbelkammer 42 erstrecken. Ferner weist die Wirbelkammer 42 eine im wesentlichen tonnenförmige Gestalt auf, indem sie in einem zwischen dem ersten Ende und dem zweiten Ende liegenden mittleren Bereich einen größeren Durchmesser aufweist als an ihrem ersten Ende bzw. ihrem zweiten Ende.

In der Nähe des ersten Endes der Wirbelkammer 42 ist in der Außenwand 54 eine Druckgaseintrittsöffnung 56 angeordnet. Ferner ist in der Nähe des zweiten Endes der Wirbelkammer 42 eine Druckgasaustrittsöffnung 58 angeordnet.

Die Druckgasausstoßkammer 50 ist im wesentlichen tonnenförmig, und wird von einer Mantelfläche 60, einer ersten (oberen) Grundfläche 62 und zweiten (unteren) Grundfläche 64 begrenzt, wobei in der ersten Grundfläche 62 eine Gaseinströmöffnung 66 und in der zweiten Grundfläche 64 eine Gasausströmöffnung 68 vorgesehen ist. Wie es in Fig. 3 gezeigt ist, ist die Gaseinströmöffnung 66 gegenüber dem unteren Ende der Wirbelkammer 42 angeordnet bzw. mit diesem verbunden.

Die Dissoziationskammer 44 umfasst eine erste Teilkammer 70a, die auf der Seite der Achse 51 teilweise von der Außenwand 54 der Wirbelkammer 42 und teilweise von der Mantelfläche 60 der Druckgasausstoßkammer 50 begrenzt ist, und eine zweite Teilkammer 70b, die mit der ersten Teilkammer 70a verbunden und von der Innenwand 52 der Wirbelkammer 42 begrenzt ist, wobei die erste Teilkammer 70a zumindest teilweise mit einer Schüttung 72 Körpern 74 gefüllt ist, wie es in Fig. 3 gezeigt ist.

Die Antriebsdüse 40 ist von einer Ummantelung 76 umhüllt.

In die Mantelfläche 60 und in die Ummantelung 76 ist jeweils eine Kühlvorrichtung 76 integriert, wobei der Teil der Kühlvorrichtung 76, der in die Ummantelung 76 integriert ist, aus einer ersten oder inneren Lage 78a und aus einer zweiten oder äußeren Lage 78b gebildet ist, die übereinander angeordnet sind, wie es in Fig. 3 gezeigt ist. Die Kühlvorrichtung 76 ist als Flächenkühlung ausgebildet, d.h. beide Lagen 78a und 78b umschließen den oberen Bereich der Antriebsdüse, wobei die innere Lage 78a einen Teil der Außenwand 80 der Dissoziationskammer 44 bildet. Die Druckgaseintrittsöffnung 56 der Wirbelkammer 42 ist mit einer auf der Außenseite der Kühlvorrichtung 76 angeordneten ersten Druckgaszuführungsöffnung 86a verbunden.

Bei der in Fig. 3 gezeigten Ausführungsform der Erfindung ist die Verbrennungsvorrichtung 46 in Form eines um die Gasausstoßkammer 50 geführten Rohres ausgebildet und weist eine Treibstoffzuführöffnung 82, eine Zündvorrichtung 84 und eine zweite Druckgaszuführungsöffnung 86b auf, wobei die Treibstoffzuführöffnung 82, die Zündvorrichtung 84 und die zweite Druckgaszuführungsöffnung 86b vorzugsweise einen geringen Abstand zueinander aufweisen.

Die Ummantelung 76 der Antriebsdüse 40 weist ferner eine Wassereinströmöffnung 88 und eine dritte Druckgaszuführungsöffnung 86c auf, wobei die Wassereinströmöffnung 88 und die dritte Druckgaszuführungsöffnung 86c vorzugsweise einen geringen Abstand zueinander aufweisen.

Bei der in Fig. 3 dargestellten Ausführungsform der Erfindung ist in der Nähe des zweiten Endes der Wirbelkammer 42, innderhalb der zweiten Teilkammer 70b der Dissoziationskammer 44 ein Spiralzapfen 92 angeordnet, der von Gas umströmt werden kann und dazu geeignet ist, die ihn umstömende Gasströmung in Rotation zu versetzen und zu verwirbeln.

Wie in Fig. 3 gezeigt, ist das erste Zuführungsrohr 28a mit der ersten Druckgaszuführungsöffnung 86a, das zweite Zuführungsrohr 28b mit der zweiten Druckgaszuführungsöffnung 86b und das dritte Zuführungsrohr 28c mit der dritten Druckgaseintrittsöffnung 86c verbunden.

Nachfolgend ist die Funktionsweise der in Fig. 3 dargestellten Antriebsdüse 40 beschrieben.

Das in das Zuführungsrohr 28b einströmende Druckgas strömt durch die zweite Druckgaseinströmöffung 86b in die Verbrennungsvorrichtung 46, in der es mit einem durch die Treibstoffzuführungsöffnung 82 zugeführten Treibstoff, vorzugsweise einem Biotreibstoff, zu einem Treibstoff-Druckgas-Gemisch gemischt wird. Das Treibstoff-Druckgas-Gemisch wird mit Hilfe der Zündvorrichtung 84 gezündet, so dass der Treibstoff ähnlich wie in einem Verbrennungsmotor verbrannt wird. Durch die bei der Verbrennung entstehende Temperatur heizen sich die Körper 74 der Schüttung 72 auf eine Temperatur T auf, wobei es nicht erforderlich ist, dass der Treibstoff bei der Verbrennung vollständig verbrannt wird.

Ein Teil der bei der Verbrennungsreaktion frei werdenden Energie wird an die Umgebung, insbesondere die angrendende Schüttung 72 abgegeben. Die bei der Verbrennung entstehenden Reaktionsprodukte werden möglichst gleichmäßig durch die Schüttung 72 geleitet. Die Temperatur T der Körper 48 der Schüttung 72 reicht aus, um den unverbrannten Treibstoff zu verbrennen. Die bei dieser Reaktion frei werdende Energie wird teilweise an den die Schüttung 72 durchströmenden Gasstrom und teilweise wieder an die Schüttung 72 abgegeben, so dass eine konstant hohe Temperatur der Körper 48 der Schüttung 72 aufrecht erhalten werden kann. Dies gewährleistet eine nahezu vollständige und schadstofffreie Verbrennung des Treibstoffes, ohne dass in der Verbrennungsvorrichtung 46 eine sehr hohe Temperatur zu herrschen braucht, denn nur ein Teil des Treibstoffes wird hier verbrannt.

Nach Durchströmen der Schüttung 72 durchströmt der Druckgasstrom der Verbrennungsgase von oben nach unten bzw. vom ersten Ende der Wirbelkammer 42 bis zum zweiten Ende der Wirbelkammer 42 die zweite Teilkammer 70b der Dissoziationskammer 44 und wird durch den Spiralzapfen 92 in Drehung versetzt.

Das über das dritte Zuführungsrohr 28c in die dritte Druckgaszuführungsöffnung 86c einströmende Druckgas wird mit dem durch die Wasserzuführöffnung 88 zugeführten Wasser zu einem Druckgas-Wasser-Gemisch vermischt. Das Druckgas-Wasser-Gemisch wird dem Kühlkreislauf 48 zugeführt und durchstömt den Kühlkreislauf 48 derart, dass das Druckgas-Wasser-Gemisches zunächst durch die erste, äußere Lage 78b nach oben und anschließend durch die zweite, innere Lage 78a nach unten geführt wird, wie es in Fig. 3 dargestellt ist. Dabei strömt das Druckgas-Wasser-Gemisch an der Schüttung 72 vorbei und erwärmt sich. Die Wärmeabführung dient einerseits dazu, zu verhindern, dass die Mantelfläche 60 der Antriebsdüse 40 eine von deren Material abhängige Grenztemperatur überschreitet. Andererseits wird dadurch das Druckgas-Wasser-Gemisch vorgewärmt. Das so vorgewärmte Druckgas-Wasser-Gemisch wird anschließend von unten durch die Schüttung 72 geleitet. Durch die Temperatur T der Körper 74 der Schüttung 72 dissoziert das Wasser des Druckgas-Wasser-Gemisches zumindest teilweise gemäß der bekannten Beziehung:

$$\Delta E + 2H_2O \rightarrow O_2 + 2H_2 \qquad (1)$$

wobei die Energie $\Delta E$ der Schüttung 72 entzogen wird. Da das Druckgas-Wasser-Gemisch aufgewärmt wurde, ist die zur Dissoziation erforderliche Energie vergleichsweise niedrig, so dass der Schüttung 72 nur eine geringe Wärmeenergie durch den Verbrennungsprozess des Treibstoffes zugeführt werden muss.

Nach dem Durchströmen der Schüttung 72 besteht das Druckgas-Wasser-Gemisch somit aus Wasserstoff, Sauerstoff, nicht dissoziiertem Wasser sowie weiteren Gasen und chemischen Verbindungen, die in dem Druckgas enthalten sind. Dieses Druckgas-Wasser-Gemisch vermischt sich mit den Verbrennungsgasen und durchströmt ebenso die zweite Teilkammer 70b der Dissoziationskammer 44. Durch den Spiralzapfen 92 wird auch diese Strömung verwirbelt. Die Strömung aus Verbrennungsgasen und Druckgas-Wasser-Gemisch bildet eine erste Strömung, die durch den Spiralzapfen 92 vermischt und rotierend aus dem unteren Bereich der Wirbelkammer 42 austritt.

Das über das erste Zuführungsrohr 28a der ersten Druckgaszuführungsöffnung 86a zugeführte Druckgas gelangt durch die Druckgaseintrittsöffnung 56 in die Wirbelkammer 42 und durchströmt diese von deren erstem Ende bis zu deren zweitem Ende spiralförmig, wie es in Fig. 3 angedeutet ist. Das Druckgas streicht an der Außenwand 52 der Wirbelkammer 42 vorbei, nimmt dabei eine Wärmeenergie auf und dehnt sich zunächst aus. Nachdem die Gasströmung den mittleren Bereich maximalen Durchmessers der Wirbelkammer 42 überschritten hat, wird das Gas aufgrund der Form der Wirbelkammer 42, die sich nach unten hin wieder verjüngt, komprimiert, so dass sich dessen Strömungsgeschwindigkeit in axialer Richtung erhöht. Im Bereich des Spiralzapfens 92 vermischt sich diese zweite Strömung der Wirbelkammer 42 mit der ersten Strömung aus der zweiten Teilkammer 70b. Aufgrund der hohen Temperatur beider Strömungen reagieren Wasserstoff und Sauerstoff wieder miteinander, wodurch maximal die Energie ΔE frei wird und die Reaktion der Gleichung (1) in umgekehrter Richtung abläuft.

Da diese Reaktion bei der Ausführungsform im Bereich des im System offenen Kühlkreislaufes 48 stattfindet, wird ein Teil der frei werdenden Energie ΔE wieder an den Kühlkreislauf 48 zurückgegeben.

Das durch die Gaseinströmöffnung 66 in die Druckgasausstoßkammer 50 eintretende Gas expandiert und durchströmt die Gasausstoßkammer 50 spiralförmig. Im hinteren Bereich der Druckgasausstoßkammer 50 verringert zunehmend der Strömungsquerschnitt, so dass das Gas wiederum eine axiale Beschleunigung erfährt, die in umgekehrter Richtung als Schub die Antriebsdüse 40 antreibt. Durch die sprialförmigen Strömungslinien der Gasströmung wird eine Reduzierung des Lärmpegels erreicht.

Die zum Betrieb des erfindungsgemäßen Düsenantriebssystems erforderlichen Mittel umfassen einen Wassertank, einen Wasserstofftank sowie einen Treibstofftank.

| | |
|---|---|
| 2 | Gasbeschleunigungsvorrichtung |
| 4 | Gasbeschleunigungsturbine |
| 6 | Gasführungskanal |
| 8 | Druckgassammelrohr |
| 10 | Gasrückführungsvorrichtung |
| 12 | Antriebsrotor |
| 14 | Rotorschaufeln |
| 16 | Gasbeschleunigungsrotor |
| 18 | Gasbeschleunigungsschaufeln |
| 20 | Rotationsachse |
| 22 | äußere Enden der Gasbeschleunigungsschaufeln |
| 24 | Drosselbereich |
| 26 | Verzweigungsstelle |
| 28a | erstes Zuführungsrohr |
| 28b | zweites Zuführungsrohr |
| 28c | drittes Zuführungsrohr |
| 30 | Abzweigungsstelle |
| 32 | Einströmende |
| 34 | Ausströmende |
| 36 | Gasverbindungsstelle |
| 38 | Zündvorrichtung |
| 40 | Antriebsdüse |
| 42 | Wirbelkammer |
| 44 | Dissoziationskammer |
| 46 | Verbrennungsvorrichtung |
| 47 | Treibstoffauslassöffnung |
| 48 | Kühlkreislauf |
| 50 | Druckgasausstoßkammer |
| 51 | Geometrische Achse |
| 52 | Innenwand |
| 54 | Außenwand |
| 56 | Druckgaseintrittsöffnung |
| 58 | Druckgasaustrittsöffnung |
| 60 | Mantelfläche |
| 62 | erste Grundfläche |
| 64 | zweite Grundfläche |
| 66 | Gaseinströmöffnung |
| 68 | Gasausströmöffnung |
| 70a | erste Teilkammer |
| 70b | zweite Teilkammer |
| 72 | Schüttung |
| 74 | Körper |
| 76 | Ummantelung |
| 78a | erste Lage der Kühlvorrichtung |
| 78b | zweite Lage der Kühlvorrichtung |
| 80 | Außenwand der Dissoziationskammer |
| 82 | Treibstoffzuführöffnung |
| 84 | Zündvorrichtung |
| 86a | erste Druckgaszuführungsöffnung |
| 86b | zweite Druckgaszuführungsöffnung |
| 86c | dritte Druckgaszuführungsöffnung |
| 88 | Wasserzuführöffnung |
| 90 | Zündvorrichtung |
| 92 | Spiralzapfen |
| 94 | Haltevorrichtung |
| 96 | Kühlvorrichtung des Drosselbereichs |
| 96a | Kühlzuführungsrohr |

**Patentansprüche**

1. Gasbeschleunigungsvorrichtung (2) zur Erzeugung von Druckgas, insbesondere Druckluft, die Folgendes umfasst:

   - eine Gasbeschleunigungsturbine (4);

   - einen Gasführungskanal (6) zur Führung eines Gasstromes;

   - ein Druckgassammelrohr (8); und

   - eine Gasrückführungsvorrichtung (10) zum Antrieb der Gasbeschleunigungsturbine (4);

   wobei

   - die Gasbeschleunigungsturbine (4) einen innenliegenden Antriebsrotor (12) umfasst, der eine Mehrzahl von Rotorschaufeln (14) aufweist, und einen außenliegenden Gasbeschleunigungsrotor (16) umfasst, der eine Mehrzahl von Gasbeschleunigungsschaufeln (18) aufweist, wobei sich der Antriebsrotor (12) und der Gasbeschleunigungsrotor (16) konzentrisch um eine gemeinsame Rotationsachse (20) drehen;

   - die Gasbeschleunigungsschaufeln (18) in Rotationsrichtung der Gasbeschleunigungsturbine (4) jeweils konkav ausgebildete Oberflächen aufweisen, und jeweils ein inneres oder achsnahes Schaufelende sowie ein äußeres oder achsfernes Schaufelende (22) aufweisen;

   - der Gasführungskanal (6) entlang eines Umkreises angeordnet ist, der bei der Rotation des Gasbeschleunigungsrotors (16) von den äußeren Schaufelenden (22) der Gasbeschleunigungsschaufeln (18) überstrichen wird, und wobei ein Ende des Gasführungskanals (6) mit einem ersten Ende des Druckgassammelrohres (8) verbunden ist;

   - das Druckgassammelrohr (8) in der Nähe seines ersten, mit dem Gasführungskanal (6) verbundenen Endes einen Drosselbereich (24) zur Ausbildung von Druckgas aufweist;

   - das Druckgassammelrohr (8) ein zweites Ende mit einer Verzweigungsstelle (26) aufweist, an der das Druckgassammelrohr (8) in ein erstes (28a), ein zweites (28b) und ein drittes Zuführungsrohr (28c) verzweigt;

   - das Druckgassammelrohr (8) eine Abzweigungsstelle (30) aufweist, die zwischen dem Drosselbereich (24) und der Verzweigungsstelle (26) angeordnet ist und die mit einem Einströmende (32) der Gasrückführungsvorrichtung (10) verbunden ist;

   - die Gasrückführungsvorrichtung (10) zudem ein Ausströmende (34) aufweist, das derart in der Nähe des Antriebsrotors (12) der Gasbeschleunigungsturbine (4) angeordnet ist, dass ein über die Gasrückführungsvorrichtung (10) rückgeführter Gasstrom in Umdrehungsrichtung der Gasbeschleunigungsturbine (4) auf den Antriebsrotor (12) gerichtet ist;

   - die Gasrückführungsvorrichtung (10) eine Gasverbindungsstelle (36) zum Einleiten von entzündbarem Gas mit Zündvorrichtung (38) aufweist, die zwischen ihrem Einströmende (32) und ihrem Ausströmende (34) angeordnet ist, wobei das entzündbare Gas-Druckgas/Druckluft-Gemisch auf die Rotorschaufeln (14) des Antriebsrotors (12) trifft.

2. Gasbeschleunigungsvorrichtung (2) nach Anspruch 1, wobei die Gasbeschleunigungsschaufeln (18) jeweils eine im wesentlichen halbkreisförmige Querschnittsfläche aufweisen.

3. Gasbeschleunigungsvorrichtung (2) nach einem der vorstehenden Ansprüche, wobei die jeweiligen Tangenten der Gasbeschleunigungsschaufeln (18) an deren äußerem Ende (22) mit der Tangente an den Umkreis in diesem Punkt im wesentlichen zusammenfallen.

4. Gasbeschleunigungsvorrichtung (2) nach einem der vorstehenden Ansprüche, wobei die Rotorschaufeln (14) jeweils gegenüber einer Ebene, die die Rotationsachse (20) enthält, geneigt sind.

5. Gasbeschleunigungsvorrichtung (2) nach einem der vorstehenden Ansprüche, wobei eine Kühlvorrichtung (96) zur Kühlung des Drosselbereichs (24) des Druckgassammelrohres (8) vorgesehen ist.

6. Gasbeschleunigungsvorrichtung (2) nach einem der vorstehenden Ansprüche, wobei die Gasrückführungsvorrichtung (10) in Form eines sichelförmigen Rohres ausgebildet ist.

7. Gasbeschleunigungsvorrichtung (2) nach einem der vorstehenden Ansprüche, wobei das Druckgassammelrohr (8) im Drosselbereich (24) eine starke Krümmung und einen reduzierten Querschnitt aufweist.

8. Gasbeschleunigungsvorrichtung (2) nach einem der vorstehenden Ansprüche, wobei die Gasbeschleunigungsvorrichtung (2) mit einer Haltevorrichtung (94) verbunden ist, die dazu geeignet ist, Bewegungen von außen sowie Schwingungen und Unwuchten der Gasbeschleunigungsvorrichtung (2) aufzunehmen, und wobei der Gasführungskanal (6) mit dem Druckgassammelrohr (8) über eine flexible Verbindung verbunden ist.

9. Gasbeschleunigungsvorrichtung (2) nach einem der vorstehenden Ansprüche, **dadurch gekennzeichnet, dass** die Gasbeschleunigungsschaufeln (18) von innen nach außen in Richtung der Rotationsachse 20 gewölbt sind.

10. Antriebsdüse (40), die von einer Gasbeschleunigungsvorrichtung (2) nach einem der Ansprüche 1 bis 9 mit Druckluft über das Druckgassammelrohr (8) versorgt ist und die Folgendes umfasst:

    - eine Wirbelkammer (42) zur Erzeugung eines spiralförmigen Druckgasstromes;

    - eine Dissoziationskammer (44) zur Dissoziation insbesondere von $H_2O$ in $H_2$ und $O_2$;

    - eine Verbrennungsvorrichtung (46) zur Verbrennung eines Treibstoffes;

    - einen Kühlkreislauf (48); und

    - eine Druckgasausstoßkammer (50) zur Erzeugung von Schub;

    wobei:

    - die Wirbelkammer (42) ein erstes Ende und ein zweites Ende aufweist, und ein Volumen einschließt, das von einer Innenwand (52) und einer Außenwand (54) begrenzt ist;

    - in der Nähe des ersten Endes der Wirbelkammer (42) in der Außenwand (54) eine Druckgaseintrittsöffnung (56) und in der Nähe des zweiten Endes der Wirbelkammer (42) in der Innenwand (52) eine Druckgasaustrittsöffnung (58) vorgesehen ist;

    - die Druckgasausstoßkammer (50) von einer Mantelfläche (60) und einer ersten (62) und einer zweiten (64) Grundfläche begrenzt ist, wobei eine Gaseinströmöffnung (66) in der ersten Grundfläche (62) und eine Gasausströmöffnung (68) in der zweiten Grundfläche (64) vorgesehen ist und die Gaseinströmöffnung (66) mit dem zweiten Ende der Wirbelkammer (42) verbunden ist;

    - die Dissoziationskammer (44) eine erste Teilkammer (70a) umfasst, die innen von der Außenwand (54) der Wirbelkammer (42) begrenzt ist, und eine zweite Teilkammer (70b) umfasst, die mit der ersten Teilkammer (70a) verbunden und außen von der Innenwand (52) der Wirbelkammer (42) begrenzt ist, wobei die erste Teilkammer (70a) zumindest teilweise mit einer Schüttung (72) aus wärmespeichernden Körpern (74) gefüllt ist, die von einem Gasstrom durchströmt werden kann;

    - die Antriebsdüse (40) von einer Ummantelung (76) umgeben ist und der Kühlkreislauf (48) zumindest teilweise in der Ummantelung (76) angeordnet ist.

    - die Ummantelung (76) eine Wasserzuführöffnung (88) zur Zuführung von Wasser in den Kühlkreislauf (48) umfasst;

    - die Verbrennungsvorrichtung (46) eine Treibstoffzuführöffnung (82) zur Zuführung von Treibstoff umfasst; und

    - die Druckgaseintrittsöffnung mit dem ersten Zuführungsrohr (28a), die Verbrennungsvorrichtung mit dem zweiten Zuführungsrohr (28b) und der Kühlkreislauf (48) mit dem dritten Zuführungsrohr (28c) verbunden ist.

11. Antriebsdüse (40) nach Anspruch 10, wobei die Wirbelkammer (42), die Dissoziationskammer (44), Verbrennungsvorrichtung (46), der Kühlkreislauf (48) und die Druckgasausstoßkammer (50) entlang einer geometrischen Achse (51) angeordnet sind.

12. Antriebsdüse (40) nach Anspruch 11, wobei die Innenwand (52) und die Außenwand (54) der Wirbelkammer (42) vorzugsweise konzentrisch um die geometrischen Achse (51) angeordnet sind und sich jeweils von dem ersten Ende der Wirbelkammer (42) bis zu dem zweiten Ende der Wirbelkammer (42) erstrecken.

13. Antriebsdüse (40) nach Anspruch 11 oder 12, wobei eine Querschnittsfläche der Innenwand (52) entlang der geometrische Achse (51) im wesentlichen konstant ist, und eine Querschnittsfläche der Außenwand (54) entlang der geometrischen Achse (51) ein Maximum aufweist, das zwischen dem ersten Ende und dem zweiten Ende angeordnet ist, so dass ein mittlerer Bereich der Wirbelkammer (42) ein größeres Volumen aufweist als ein entsprechender Bereich des ersten Endes bzw. des zweiten Endes der Wirbelkammer (42).

14. Antriebsdüse (40) nach einem der Ansprüche 10 bis 13, wobei die Druckgasaustrittsöffnung (58) vorzugsweise gleichmäßig um die geometrische Achse (51) angeordnet ist.

15. Antriebsdüse (40) nach einem der Ansprüche 10 bis 14, wobei die Druckgasausstoßkammer (50) im wesentlichen tonnenförmig ist, so dass ein aus der Verbindung der Wirbelkammer (42) mit der Druckgasausstoßkammer (50) gebildeter geometrischer Körper an der Verbindungsstelle zwischen der Wirbelkammer (42) mit der Druckgasausstoßkammer (50) eine Verengung aufweist.

16. Antriebsdüse (40) nach einem der Ansprüche 10 bis 15, wobei das Wasser über die Wasserzuführöffnung (88) vorzugsweise in zerstäubter Form in den Kühlkreislauf (48) eingespritzt wird.

17. Antriebsdüse (40) nach einem der Ansprüche 10 bis 16, wobei die Treibstoffzuführöffnung (82) in der Nähe einer Verbindungsstelle zwischen der Verbrennungsvorrichtung (46) mit dem zweiten Zuführungsrohr (28b) und die Wasserzuführöffnung (88) in der Nähe einer Verbindungsstelle zwischen dem Kühlkreislauf (48) mit dem dritten Zuführungsrohr (28c) angeordnet ist.

18. Antriebsdüse (40) nach einem der Ansprüche 10 bis 17, wobei die Körper (74) vorzugsweise aus einer Keramik hergestellt sind und vorzugsweise eine hohe Wärmekapazität aufweisen.

19. Antriebsdüse (40) nach einem der Ansprüche 10 bis 18, wobei die Druckgaseintrittsöffnung (56) derart ausgebildet ist, dass ein in die Wirbelkammer (42) einströmender Druckgasstrom im wesentlichen entlang der Innenseite der Außenwand (54) der Wirbelkammer (42) in die Wirbelkammer (42) einströmt.

20. Antriebsdüse (40) nach einem der Ansprüche 10 bis 19, wobei in der Nähe des zweiten Endes der Wirbelkammer (42), innerhalb der zweiten Teilkammer (70b) der Dissoziationskammer (44), ein Spiralzapfen (92) so angeordnet ist, dass er von dem durch die zweite Teilkammer (70b) strömenden Druckgasstrom umströmt wird, wobei der Spiralzapfen (92) derartig ausgebildet ist, dass die Geschwindigkeit des Druckgasstromes eine um die geometrische Achse (51) gerichtete Tangentialkomponente erhält.

21. Antriebsdüse (40) nach einem der Ansprüche 10 bis 20, wobei sowohl der in der Verbrennungsvorrichtung (46) vollständig verbrannte als auch der in der Verbrennungsvorrichtung (46) unvollständig verbrannte Treibstoff durch eine Treibstoffauslassöffnung (47) in die Dissoziationskammer (44) geleitet wird.

22. Antriebsdüse (40) nach einem der Ansprüche 10 bis 21, wobei die Verbrennungsvorrichtung (46) ringförmig um die Druckgasausstoßkammer (50) und angrenzend an die Schüttung (72) von Körpern (74) angeordnet ist.

23. Antriebsdüse (40) nach einem der Ansprüche 10 bis 22, wobei die Ummantelung (76) wenigstens die Wirbelkammer (42) und die Dissoziationskammer (44) umschließt.

24. Antriebsdüse (40) nach einem der Ansprüche 10 bis 23, wobei der Kühlkreislauf (48) flächig ausgeführt ist.

25. Antriebsdüse (40) nach einem der Ansprüche 10 bis 24, wobei der Kühlkreislauf (48) zudem in einem Teil der Mantelfläche (60) angeordnet ist, der die Dissoziationskammer (44) begrenzt.

26. Antriebsdüse (40) nach einem der Ansprüche 10 bis 25, wobei der Kühlkreislauf (48) im wesentlichen in dem Teil der Ummantelung (76) angeordnet ist, der die Dissoziationskammer (44) begrenzt.

27. Düsenantriebssystem, das Folgendes umfasst:

- eine Gasbeschleunigungsvorrichtung (2) nach den Ansprüchen 1 bis 9, und

- eine Antriebsdüse (40) nach den Ansprüchen 10 bis 26, die mit der Gasbeschleunigungsvorrichtung (2) verbunden ist,

wobei:

- das von der Gasbeschleunigungsvorrichtung (2) erzeugte Druckgas gleichzeitig der Wirbelkammer (42) über das erste Zuführungsrohr (28a), der Verbrennungsvorrichtung (46) über das zweite Zuführungsrohr (28b) und der Kühlvorrichtung (76) über das dritte Zuführungsrohr (28c) zugeführt wird;

- der Druckgasverbindungsstelle (36) der Gasrückführungsvorrichtung (10) ein entzündbares Gas zugeführt wird, das sich mit dem Druckgas, das von der Abzweigungsstelle (30) des Druckgassammelrohrs (8) abgezweigt wird und in das Einströmende (32) der Gasrückführungsvorrichtung (10) einströmt, zu einem Gas-Druckgas-Gemisch vermischt, das mit einer Zündvorrichtung (38) gezündet wird, wobei eine exotherme chemische Reaktion stattfindet, bei der sich das Gas-Druckgas-Gemisch in der Gasrückführungsvorrichtung (10) ausdehnt, aus dem Ausströmende (34) herausgedrängt wird und den Antriebsrotor (12) der Gasbeschleunigungsturbine (4) antreibt;

- mit Hilfe des Antriebsrotors (12) angesaugtes Gas zu den innenliegenden Schaufelenden der Gasbeschleunigungsschaufeln (18) des Gasbeschleunigungsrotors (16) strömt und durch die Zentrifugalbeschleunigung des Gasbeschleunigungsrotors (16) zu den äußeren Enden (22) der Gasbeschleunigungsschaufeln (18) gedrängt und dem Gasführungskanal (6) zugeführt wird;

- das dem Gasführungskanal (6) zugeführte Gas in dem Gasführungskanal (6) in Rotationsrichtung des Gasbeschleunigungsrotors (16) zum Drosselbereich (24) des Druckgassammelrohres (8) gedrängt wird, so dass sich im Drosselbereich (24) Druckgas ausbildet;

- das durch den Drosselbereich (24) strömende Druckgas teilweise der Gasrückführungsvorrichtung (10) sowie dem ersten (28a), dem zweiten (28b) und dem dritten Zuführungsrohr (28c) zugeführt wird;

- das dem ersten Zuführungsrohr (28a) zugeführte Druckgas durch die Druckgaseintrittsöffnung (56) in die Wirbelkammer (42) eingeleitet wird und durch die DruckDruckgasaustrittsöffnung (58) aus der Wirbelkammer (42) aus- und in die Gasausstoßkammer (50) geleitet wird

- das dem zweiten Zuführungsrohr (28b) zugeführte Druckgas mit dem über die Treibstoffzuführöffnung (82) zugeführten Treibstoff vermischt und in der Verbrennungsvorrichtung (46) zumindest teilweise verbrannt wird, so dass die Körper (74) der Schüttung (72) in der Dissoziationskammer (44) eine Temperatur erreichen, die dazu geeignet ist, Wassermoleküle in Wasserstoffmoleküle und in Sauerstoffmoleküle zu dissoziieren;

- der in der Verbrennungsvorrichtung (46) vollständig verbrannte Treibstoff sowie der in der Verbrennungsvorrichtung (46) unvollständig verbrannte Treibstoff über die Treibstoffauslassöffnung (47) in die Dissoziationskammer (44) geleitet wird;

- der in der Verbrennungsvorrichtung (46) noch nicht verbrannte und über die Treibstoffauslassöffnung (47) in die Dissoziationskammer (44) geleitete Treibstoff in der Dissoziationskammer (44) vollständig verbrannt wird, so dass durch die bei dieser exothermen Reaktion entstehende Energie eine Temperatur der Körper (74) der Schüttung (72) aufrechterhalten werden kann, die dazu geeignet ist, Wassermoleküle in Sauerstoffmoleküle und Wasserstoffmoleküle zu dissoziieren;

- das dem dritten Zuführungsrohr (28c) zugeführte Druckgas mit dem über die Wassereinführöffnung (88) eingespritztem Wasser vermischt und das Druckgas-Wasser-Gemisch über den Kühlkreislauf (48) durch die Körper (74) der Schüttung (72) geleitet wird, so dass das in dem Druckgas-Wasser-Gemisch enthaltene Wasser aufgrund der hohen Temperatur der Körper (74) der Schüttung (72) in der Dissoziationskammer (44) zu Wasserstoff und Sauerstoff dissoziiert;

- der in der Dissoziationskammer (44) dissoziierte Wasserstoff und Sauerstoff sowie der in der Dissoziationskammer (44) verbrannte Treibstoff durch die zweite Teilkammer (70b) geleitet werden und sich im Bereich des zweiten Endes des Wirbelkammer (42) mit dem über das erste Zuführungsrohr (28a) zugeführten Druckgas vermischen, wobei sich das Druckgas beim Durchströmen der Wirbelkammer (42) aufheizt und sich aufgrund dieser Aufheizung und der durch die Reaktion des Wasserstoffs mit dem Sauerstoff entstehenden hohen Temperaturen schlagartig ausdehnt und mit hoher Strömungsgeschwindigkeit in die Druckgasausstoßkammer (50) einströmt und so einen Schub erzeugt, der die Antriebsdüse (40) in einer Richtung von der Druckgasausstoßkammer (50) zur Wirbelkammer (42) beschleunigt.

**28.** Düsenantriebssystem nach Anspruch 27, wobei die Aufteilung des von dem Druckgassammelrohr (8) bereitgestellten Druckgasvolumenstromes auf die Wirbelkammer (42), die Verbrennungsvorrichtung (46) und die Kühlvorrichtung (76) je nach Bedarf gesteuert werden kann.

**29.** Düsenantriebssytem nach Anspruch 27 oder 28, wobei das Druckgas vorzugsweise so in die Wirbelkammer (42) eingeleitet wird, dass es spiralförmig entlang der Außenwand (54) und um die Innenwand (52) der Wirbelkammer (42) strömt.

**30.** Düsenantriebssystem nach einem der Ansprüche 27 bis 29, das außerdem ein Kühlzuführungsrohr (96a) umfasst, das ein erstes Ende und ein zweites Ende aufweist, wobei das erste Ende mit dem Drosselbereich (24) und das zweite Ende mit dem Kühlkreislauf (48) verbunden ist, um eine Übertragung von Wärmeenergie von dem Drosselbereich (24) zu dem Kühlkreislauf (48) zu ermöglichen.

Fig. 1

Fig. 2

18

Fig. 3